# EUROPÄISCHE PATENTSCHRIFT

(11) **EP 1 647 840 B1**
(45) Veröffentlichungstag und Bekanntmachung des Hinweises auf die Patenterteilung: **23.12.2009**
(21) Anmeldenummer: 05020864.4
(22) Anmeldetag: 24.09.2005
(51) Int. Cl.: G01T 1/00, G01T 3/00, G01T 7/00, G01T 1/29

(54) **Röntgen- oder neutronenoptisches Analysegerät mit variabel ausgeleuchtetem Streifendetektor**
X-ray-optical or neutron-optical analyser comprising a stripdetector having variable light-transmission
Analyseur radiologique-optique ou neutronique-optique comportant un détecteur à bandes avec une transmission variable de la lumière

(30) Priorität: 16.10.2004 DE 102004050543
(43) Veröffentlichungstag der Anmeldung: 19.04.2006
(73) Patentinhaber: Bruker AXS GmbH, 76187 Karlsruhe (DE)
(72) Erfinder: Gerndt, Ekkehard, Dr., 76227 Karlsruhe (DE); Grybos, Pawel, Dr., 30-199 Rzaska (PL); Brügemann, Lutz, Dr., 76448 Durmersheim (DE); Eisenhower, Rachel, Dr., 76227 Karlsruhe (DE); Kasten, Arne, Prof. Dr., 76139 Karlsruhe (DE)
(74) Vertreter: Kohler Schmid Möbus

(56) Entgegenhaltungen:
- EP-A1- 0 468 582
- CH-A- 486 034
- DE-A1- 10 153 978
- DE-A1- 10 226 828
- DE-A1- 10 237 546
- FR-A- 2 739 455

## Beschreibung

Die Erfindung betrifft ein Röntgendiffraktometer mit Mitteln zum Richten von Strahlung aus einer Quelle auf eine Probe mit einem Detektor mit n im wesentlichen identischen, in einer ersten Richtung x parallel nebeneinander angeordneten, in einer zweiten Richtung y streifenförmigen Detektorelementen Dᵢ; wobei i = 1, ...n, zum eindimensional ortsabhängigen Detektieren von der Probe reflektierter, gestreuter oder gebeugter auf den Detektor einfallender Strahlung und mit einer Nachweiselektronik zum Verarbeiten der Detektorsignale der n Detektorelemente Dᵢ wobei die Nachweiselektronik maximal eine bestimmte Strahlungsintensität pro Detektorelement Dᵢ zuverlässig verarbeiten kann ohne zu übersteuern.

Ein derartiges Röntgenanalysegerät ist bereits aus US 2002/0053641 bekannt.

Röntgenanalysegeräte zum Detektieren von transmittierter Strahlung sind aus DE 102 37 546 A1, DE 10153978, und FR 2 739 455 A bekannt. DE 102 37 546 A1 beschreibt ein Röntgen-Computertomographie-Gerät mit einem mehrzellig ausgebildeten Detektor, dessen Zeilen in z-Richtung aneinander gereiht sind und sich jeweils senkrecht zu dieser z-Richtung erstrecken, wobei zwischen der Anode der Röntgenröhre und dem mehrzeiligen Detektor mindestens ein erster Filter angeordnet ist, der bezüglich seines in z-Richtung ortsabhängigen Schwächungsverhaltens derart ausgebildet ist, dass die richtungsabhängige Intensitätsänderung der transmittierten Röntgenstrahlung in z-Richtung ausgeglichen wird. Aus FR 2 739 455 A ist eine Mammographieapparatur bekannt, welche die transmittierte und durch das Objekt geschwächte Strahlung mit einem ortsauflösenden Detektor nachweist und ein Bild erstellt.

Streuung, Beugung und Reflektion von Röntgen- und Neutronenstrahlung sind wichtige Methoden der Struktur-Aufklärung. Durch die Beugung von Röntgen- oder Neutronenstrahlung kann beispielsweise auf die Symmetrieeigenschaften des streuenden (in der Regel kristallinen) Materials geschlossen werden.

CH 486 034 A offenbart einen Neutronenspektrometer, bei dem sowohl der Durchlasszähler als auch der Endzähler einen Schachbrett Zähler umfasst, so dass die emittierten Protonen nicht nur nach ihrer Anzahl und Energie, sondern auch nach ihrer Richtung messbar sind.

Zur Detektion des Winkels, unter dem die Strahlung die Probe verlässt bezüglich des einfallenden Strahlenbündels, ist der aus US 2002/0053641 bekannte Detektor mit einem Array aus nebeneinander liegenden, streifenförmigen Detektorelementen ausgestattet. Dies erlaubt eine eindimensional ortsaufgelöste Aufnahme von gebeugter oder gestreuter Röntgenstrahlung. Der Ort eines Detektorelements ist dabei ein Maß für die Winkelablenkung, mit der die Strahlung die Probe verlässt. Durch die Aufnahme einer ortsaufgelöste Intensitätsverteilung (Diffraktogramm) mit einer derartigen Vorrichtung können daher Informationen über die Gitterstruktur der Probe erhalten werden. Speziell bei Messungen, die unter streifendem Einfall von Röntgenstrahlung durchgeführt werden, beispielsweise bei XRR-Messungen (x-ray reflection), nimmt die Intensität innerhalb des aufgenommenen Röntgendiffraktogramms exponentiell mit dem Ort ab, so dass sich der Intensitätsbereich des gesamten Diffraktogramms über mehrere Zehnerpotenzen erstreckt. Da die verschiedenen Detektorelemente dementsprechend unterschiedlich stark beleuchtet werden, werden für die Aufnahme von Röntgendiffraktogrammen Detektoren mit einem sehr hohen dynamischen Bereich (mehrere Zehnerpotenzen) benötigt. Bei sehr hohen Zählraten erreichen handelsübliche Detektoren jedoch ihre Sättigung, so dass aus diesen Bereichen keine nützlichen Informationen gezogen werden können. Der effektiv nutzbare Bereich solcher bekannten Detektoren ist daher begrenzt.

Um Strahlung in definierten Bereichen der Detektorelemente auszublenden, ist es im Rahmen von Röntgentransmissionsmessungen aus der Medizin bekannt, eine Blende vor einem eindimensionalen Detektor anzuordnen. Es wird hier essentiell nur ein Schattenbild gemessen. Eine derartige Anordnung wird beispielsweise beschrieben von A. Cabal et al. "Feasibility of silicon strip detectors and low noise multichannel readout system for medical digital radiography." 6th Mexican Symposium on Medical Physics, Mexico, Mexico City, March 2002, American Institute of Physics Conference Proceedings, no 630, 2002, pp. 202-207, USA

Aufgabe der vorliegenden Erfindung ist es, ein Röntgendiffraktometer zur Detektion von reflektierter, gestreuter oder gebeugter Strahlung vorzuschlagen, mit dem eine Übersteuerung der Detektorelemente weitgehend vermieden oder zumindest verringert wird.

Diese Aufgabe wird erfindungsgemäß dadurch gelöst, dass zwischen der Position der Probe und dem Detektor ein optisches Element angeordnet ist, das entsprechend einer vorgebbaren, nicht konstanten Durchlassfunktion f(x) jeweils einen Teil der auf die Flächen der n Detektorelemente (Di) einfallenden reflektierten, gestreuten oder gebeugten Strahlung abdeckt oder abschwächt und/oder dass das optische Element eine relativ zum Detektor entlang der Streifenrichtung y verschiebbare Blende umfasst.

Durch ein optisches Element mit einer nicht-konstanten Durchlassfunktion f(x) kann die Lichtdurchlässigkeit im Bereich bestimmter Detektorelemente gegenüber anderen Detektorelementen reduziert werden, so dass eine Sättigung einzelner Detektorelemente vermieden werden kann. In ähnlicher Weise kann eine in y-Richtung verschiebbare Blende Strahlung aus bestimmten Bereichen innerhalb eines Detektorelements ausblenden. Die detektierte Strahlung resultiert dann lediglich aus einem Bereich Δy der jeweiligen Detektorelemente, so dass auch auf diese Weise eine Übersteuerung der Detektorelemente vermieden werden kann.

Das erfindungsgemäße Röntgendiffraktometer findet beispielsweise Anwendung beim mindestens eindimensional in x-Richtung ortsabhängigen Detektieren von auf einen Detektor eines Röntgendiffraktometers einfallender Strahlung, deren Intensität als Funktion von x einen Verlauf hat, dessen Einhüllende, d.h. die Verbindung der Intensitätsmaxima, aus einer Vormessung oder andere Weise grob bekannt ist. Für eine Messung wird ein optisches Element mit einer Durchlassfunktion f(x) und gegebenenfalls ein Graufilter mit einer Abschwächung k ausgewählt, derart, dass für jedes Detektorelement die Strahlung soweit abgeblendet/abgeschwächt wird, dass die Einhüllende des Intensitätsverlaufs I(x) die Nachweiselektronik nicht übersteuert und dass die Durchlassfunktion f(x) integriert jeweils über die n Detektorelemente Dᵢ und gegebenenfalls die Abschwächung k bei der Bestimmung eines wahren Intensitätsverlaufs der Strahlung I(x) berücksichtigt wird.

Um den wahren Intensitätsverlaufs der Strahlung I(x) exakt zu bestimmen, erweist es sich als günstig, Abweichungen von der Linearität der Kennlinien der Detektorelemente zu berücksichtigen.

Besonders vorteilhaft ist es, wenn die, den n Detektorelemente Dᵢ zugeordneten Intensitäten nach individuell unterschiedlichen Kennlinien berechnet werden.

Bei dem erfindungsgemäßen Röntgendiffraktometer weist die von der Probe auf den Detektor einfallende Strahlung eine Intensitätsverteilung I(x) auf, die über mindestens eine Größenordnung, vorzugsweise mehrere Größenordnungen, variiert. Dabei handelt es sich um ein Diffraktogramm der Probe. Die Vorteile der Erfindung kommen hier besonders gut zur Geltung, da der dynamische Bereich konventioneller Detektoren für Diffraktogramme, bei denen die Intensitätsverteilung I(x) über mehrere Größenordnungen variiert, oft nicht ausreicht.

Bei einer bevorzugten Ausführungsform des erfindungsgemäßen Röntgendiffraktometers nimmt die Durchlassfunktion f(x) in x-Richtung bis zu einem Maximalwert fₘₐₓ monoton zu, wobei insbesondere fₘₐₓ = 1 gilt. Auf diese Weise wird an dafür geeigneten Stellen des Detektors die volle Strahlungsintensität detektiert.

Die Durchlassfunktion f(x) ist vorzugsweise so gewählt ist, dass sie im Wesentlichen der Inversen der Einhüllenden eines Diffraktogramms I(x), folgt. Die Strahlungsdurchlässigkeit wird somit für Bereiche, in denen wenig Strahlungsintensität erwartet wird hoch und für Bereiche, in denen hohe Strahlungsintensitäten erwartet werden, entsprechend niedrig gewählt werden, so dass eine möglichst hohe Ausbeute an detektierter Strahlung erreicht werden kann, ohne dass der Detektor in die Sättigung geht.

Es ist auch eine Ausführungsform des erfindungsgemäßen Röntgendiffraktometers denkbar, bei der zusätzlich ein Graufilter vorgesehen ist, welches die Gesamtintensität der auf den Detektor fallenden Strahlung integral um einen Faktor k abschwächt.

Eine weitere Ausführungsform sieht vor, dass das optische Element in Teilen für die Strahlung transparent und in anderen Teilen undurchlässig ist. Ein solches optisches Element kann beispielsweise in Form einer Blende, insbesondere eines Spalts, vorliegen. Hierdurch können einzelne Detektorelement oder Teile einzelner Detektorelemente vollständig ausgeblendet werden.

Eine bevorzugte Ausführungsform des Röntgendiffraktometers umfasst ein Keilfilter in x-Richtung als optisches Element. Somit kann auf einfache Weise ein monotoner Anstieg der Strahlungsdurchlässigkeit des optischen Elements realisiert werden.

Bei einer besonders vorteilhaften Ausführungsform des Röntgendiffraktometers umfasst das optische Element einen Spalt in x-Richtung, der in y-Richtung verschiebbar ist. Das optische Element kann somit nach einer Messung mindestens einmal in y-Richtung verschoben und die Messung wiederholt und akkumuliert werden. Auf diese Weise kann auch der gesamte Detektorbereich abgescannt und die Gesamtintensität ermittelt werden, ohne den dynamischen Bereich des Detektors zu verlassen.

Nach einer Messung wird das optische Element beispielsweise mindestens (j-1)-mal (j > 1) in y-Richtung verschoben, die Messung (j-1)-mal wiederholt. Somit wird ein zweidimensionaler Intensitätsverlauf der Strahlung I(x,y) mit n Messwerten in x-Richtung und j Messwerten in y-Richtung gewonnen.

Eine vorteilhafte Anwendung dieses Röntgendiffraktometers besteht des Weiteren im eindimensional ortsabhängigen Detektieren in y-Richtung von auf einen Detektor einfallender Strahlung mittels des erfindungsgemäßen Röntgendiffraktometers, deren Intensität als Funktion von x und y einen Verlauf hat, dessen Einhüllende, d.h. die Verbindung der Intensitätsmaxima, aus einer Vormessung oder andere Weise grob bekannt ist. Dabei wird für eine Messung eine Blende mit einer Spaltbreite und gegebenenfalls ein Graufilter mit einer Abschwächung k ausgewählt, derart, dass für jedes Detektorelement die Strahlung soweit abgeblendet/abgeschwächt wird, dass die Einhüllende des Intensitätsverlaufs I(x,y) die Nachweiselektronik nicht übersteuert und dass bei oder nach der Messung die Intensitäten der n Detektorelemente Dᵢ akkumuliert werden, die Blende mindestens einmal in y-Richtung verschoben und die Messung und Akkumulation wiederholt wird.

Eine besonders bevorzugte Ausführungsform umfasst einen Spalt, der eine Breite aufweist, die klein ist gegen den Abstand benachbarter Detektorelemente (Dᵢ), insbesondere kleiner als der halbe Abstand. Es wird hierdurch ermöglicht, lediglich einen Teil der auf ein Detektorelement auftreffenden Strahlung zu detektieren und somit die Ortsauflösung zu erhöhen.

Eine spezielle Ausführungsform der Erfindung sieht vor, dass das optische Element zwei separat verschiebbare Schneiden aufweist. Je nach Anwendung kann auf diese Weise ein Spalt mit variierendem Abstand realisiert werden

Bei einer weiten Ausführungsform des erfindungsgemäßen Röntgendiffraktometers weist das optische Element im Bereich zumindest einiger der n Detektorelemente (Dᵢ) unterschiedlich viele und/oder große über die Detektorfläche verteilte transparente Bereiche auf. Für spezielle Anwendungen interessante Bereiche können somit gezielt ausgewählt und gleichzeitig nicht interessierende Bereiche ausgeblendet werden.

Besonders vorteilhaft ist es, wenn das Röntgendiffraktometer mehrere gegeneinander austauschbare und/oder miteinander kombinierbare optische Elemente aufweist. Das Röntgendiffraktometer kann dann für verschiedene Anwendungen verwendet werden.

Für besonders empfindliche Messungen erweist es sich als vorteilhaft, wenn der Detektor und die Nachweiselektronik den Einfall einzelner Strahlungsquanten auf die Detektorelemente (Dᵢ) registriert und zählt. Dies kann beispielsweise mittels eines Einzelphotonendetektors realisiert werden.

Der Vorteil der Erfindung kommt besonders gut zur Geltung, wenn der Winkel zwischen der auf die Probe einfallenden und der von der Probe ausgehenden Strahlung zwischen 165° und 180° liegt, da bei Messungen mit derartigen Winkelverhältnissen, die auch als "grazing incidence" - Messungen bezeichnet werden, in kleinen Winkelbereichen sehr hohe Intensitätsschwankungen auftreten.

Insbesondere für GISAXS (grazing incidence small angle x-ray scatting) ist es vorteilhaft, wenn der Detektor um eine Achse senkrecht zur Detektoroberfläche drehbar ist. Die Detektorstrecke kann dadurch eine Kreisfläche senkrecht zur Streurichtung überfahren, die einen Durchmesser von wenigstens der Länge der Detektorstrecke aufweist. Bei Wahl des Drehpunkts an einem Ende der Detektorstrecke ist sogar ein Durchmesser der Kreisfläche von einer doppelten Detektorstreckenlänge möglich. Der eindimensionale, drehbar gelagerte Detektor wird somit zu einem virtuellen zweidimensionalen Detektor. Bei Verwendung einer Blende, deren Öffnung kleiner als die Granularität des Detektors ist kann darüber hinaus die Ortsauflösung in beliebiger Richtung verbessert werden.

Das erfindungsgemäße Röntgendiffraktometer kann darüber hinaus auch als Punktdetektor (0-D Detektor) Verwendung finden, indem die von der Nachweiselektronik detektierten Strahlungsintensitäten der einzelnen Detektorelemente aufaddiert werden. Bekannte schnelle 0-D Detektoren (bis 10^8 cps (counts per second)) weisen eine relativ kleine sensitive Fläche (ca. 3 mm x 5 mm) auf. Mit dem erfindungsgemäßen Röntgendiffraktometer kann dagegen ein 0-D Detektor realisiert werden, der eine hohe Zählrate von bis zu 2 x 10^8 cps und gleichzeitig eine sensitive Fläche von bis zu 15mm x 15 mm aufweist, was bei Siliziumdriftkammern beispielsweise nur mit hohem technischen und finanziellen Aufwand realisierbar ist.

Weitere Vorteile der Erfindung ergeben sich aus der Beschreibung und der Zeichnung. Ebenso können die vorstehend genannten und die weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1a: eine schematische Darstellung einer Seitenansicht eines erfindungsge- mäßen Röntgendiffraktometers;
- Fig. 1b: eine schematische Darstellung einer Draufsicht eines erfindungsgemäßen Röntgendiffraktometers aus Fig. 1a;
- Fig. 2: eine schematische Darstellung eines experimentellen Aufbaus des Detek- tors und der Auswerteelektronik, und
- Fig. 3: eine beispielhafte Darstellung eines vor den Detektorelementen angeord- neten Spalts.

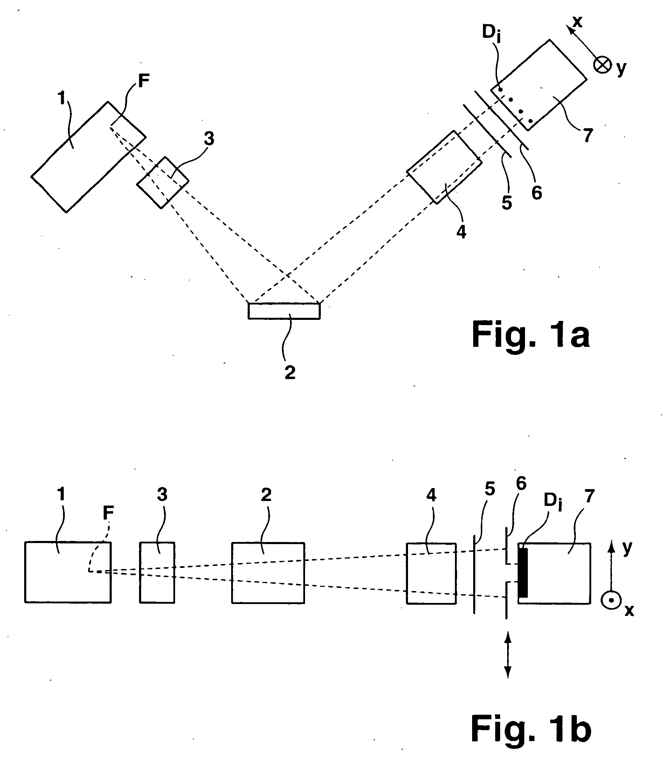

**Fig. 1a** und **Fig. 1b** zeigen eine Seitenansicht beziehungsweise eine Draufsicht eines erfindungsgemäßen Röntgendiffraktometers. Eine Quelle **1** emittiert Strahlung, die auf eine Probe **2** gerichtet ist. Die Quelle **1** kann dabei ein Teil des Röntgendiffraktometers sein, z.B. eine konventionelle Röntgenquelle, es kann sich dabei aber auch um eine extern installierte Quelle, wie z.B. ein Synchrotron handeln. Vor der Röntgenquelle 1 befindet sich eine Primäroptik **3.** Diese kann Kristalle, Spiegel oder andere Komponenten enthalten, welche die Röntgenstrahlung monochromatisieren. Monochromatische Strahlung wird beispielsweise bei Messverfahren wie XRR (x-ray reflection), GID(grazing incidence defraction), GISAXS (grazing incidence small angle x-ray scatterin) häufig, aber nicht unbedingt immer, verwendet, und kann auch verschiedene enge Bandbreiten haben. Des Weiteren kann die Primäroptik 3 Monochromatorspiegel/-kristalle und einem Schlitzsystem umfassen. Nach Durchlaufen der Primäroptik 3 trifft die Strahlung auf die Probe 2 und wird dort reflektiert, gestreut oder gebeugt. Die von der Probe 2 ausgehende Strahlung durchläuft eine optische Vorrichtung **4** und trifft auf ein oder mehrere optische Elemente, bei der in Fig. 1 gezeigten Ausführungsform auf ein Filter **5** und einen in y-Richtung bewegliche Spalt **6,** bevor die Strahlung in einem Detektor **7,** welcher als Streifendetektor ausgebildet ist, detektiert wird.

Für Messungen in der Bragg-Brentano Geometrie muss die in Fig. 1 dargestellte Anordnung derart abgeändert werden, dass sich der Fokus F der Quelle 1 und die Blende 6 vor dem Detektor 7 auf einem Kreis, dem Fokussierkreis, befinden. Für Anwendungen in Parallelgeomtrie, die für viele Messmethoden verwendet wird, ist dies jedoch nicht erwünscht. Um eine Übersteuerung des Detektors 7 aufgrund zu hoher Strahlungsintensität zu vermeiden, wird in ausgewählten Bereichen, vorzugsweise in Bereichen, in denen eine hohe Strahlungsintensität erwartet wird, die Strahlung durch die optischen Elemente ausgeblendet oder abgeschwächt. Mit der Kenntnis des Abschwächungsfaktors der verwendeten optischen Elemente kann so auf die wirkliche Strahlungsintensität geschlossen werden, ohne denn Detektor 7 zu übersteuern.

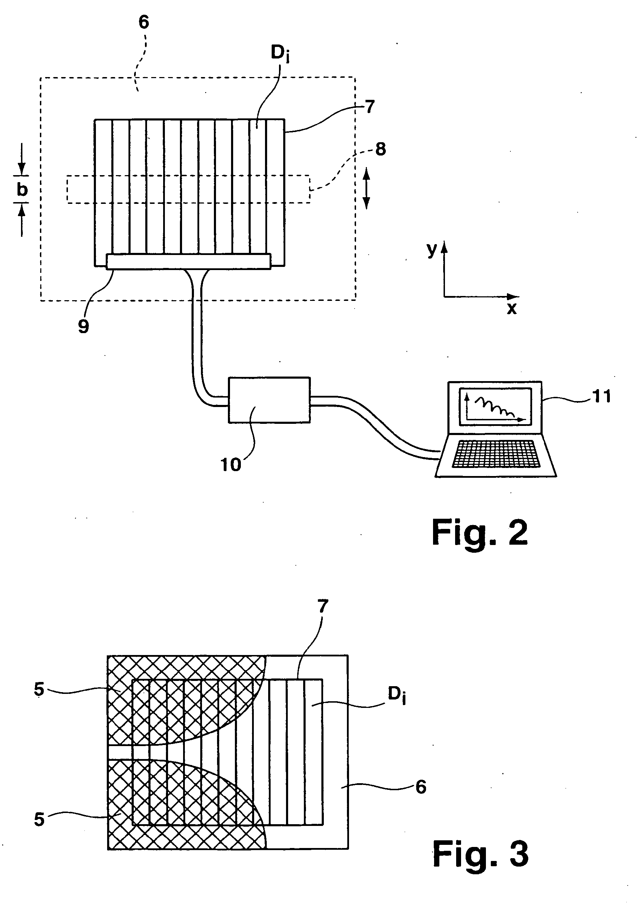

Eine Ausblendung der Strahlung in bestimmten Breichen kann durch eine Anordnung realisiert werden wie sie in **Fig. 2** dargestellt ist. Fig. 2 zeigt einen Detektor 7 mit n im Wesentlichen identischen, in einer ersten Richtung x parallel nebeneinander angeordneten, in einer zweiten Richtung y streifenförmigen Detektorelementen **Dᵢ.** Vor dem Detektor ist ein optisches Element (gestrichelt) in Form einer entlang der Streifenrichtung y verschiebbaren Blende 6 mit einer Spaltöffnung **8** und Spaltbreite **b** angeordnet. Durch die verschiebbare Blende 6 kann ein Bereich Δy der Breite b der Detektorelemente Dᵢ ausgewählt werden, in dem die einfallende Strahlung detektiert wird. Die auf die Detektorelemente Dᵢ treffende Strahlung erzeugt Elektronen-Loch-Paare. Die Elektronen werden in einer Ausleseeinrichtung **9** gesammelt und einer Auswerteeinrichtung **10** zugeführt. Nach Auswertung kann die detektierte Strahlungsintensität in Form eines Diffraktogramms auf einem Computerdisplay **11** angezeigt werden. Die außerhalb der Spaltöffnung 8 auftreffende Strahlung wird dabei ausgeblendet. Durch geeignetes Verschieben der Blende 6 kann sukzessive die gesamte Fläche eines jeden Detektorelements Dᵢ "abgescannt" und durch Summation der für ein Detektorelement Dᵢ gemessenen Werte die Gesamtintensität der auf das Detektorelement Dᵢ auftreffenden Strahlung ermittelt werden. Ein Übersteuern des Detektors aufgrund von zu hoher Strahlungsintensität wird hierdurch vermieden. Durch das Aufspalten der Messung in viele Messschritte kann die effektiv erreichbare Zählrate bis zu mehreren Größenordnungen erweitert werden.

Da die in den beschriebenen Einzelmessungen ermittelten Werte, je nach Stellung der Blende, einem bestimmten Bereich in y-Richtung zugeordnet sind und somit auch in y-Richtung ortsaufgelöste Informationen enthalten, kann durch geeignetes Verschieben der Blende 6 ein zweidimensionales, zusätzlich in y-Richtung aufgelöstes, Diffraktogramm erstellt werden. Das erfindungsgemäße Röntgendiffraktometer ermöglicht auf diese Weise die Aufnahme von 2-D Diffraktogrammen mittels eines 1-D Detektors 7.

Dies ist besonders vorteilhaft bei der Überprüfung, ob eine Pulverprobe unerwartet Texturen aufweist. Hierbei wird der Detektor als OED (1-D ortsempfindlicher Detektor, *engl*. PSD) verwendet, während der Überprüfung aber ein 2-D Bild aufgenommen. Mit diesem wird die Struktur der Debyeringe gemessen und entsprechende Rückschlüsse gezogen, die unter Umständen die Messparameter für die folgenden Untersuchungen der Probe beeinflussen. Der Vorteil der Erfindung liegt darin, dass durch einfache Mittel eine nur gelegentlich durchzuführende 2-D Messung möglich ist. Ein aufwendigerer Detektor (Sensor) für die zweite Dimension und die dazu benötigte Elektronik werden eingespart.

Ein weiteres Anwendungsgebiet des erfindungsgemäßen Röntgendiffraktometers sind Topographiemessungen mit Röntgenstrahlen. Diese werden genutzt um Kristalldefekte, z.B. in der Halbleiterindustrie, zu finden. Auch hierfür ist eine 2-D-Auslesung erforderlich, die mit der Erfindung mit einem geringen technischen Aufwand geleistet werden kann. Für das gelegentliche Messen ist die Erfindung gut geeignet, zumal der Messaufbau mit einem XRR-, GID-, GISAXS- Aufbau gut kombiniert werden kann, was im Interesse des Nutzers sein kann.

Wählt man eine Blende mit einer Spaltbreite b, die kleiner ist als die Granularität des Detektors 7, so kann die Ortsauflösung des mit dieser Anordnung aufgenommenen Diagramms gegenüber der Auflösung des Detektors 7 alleine verbessert werden.

**Fig. 3** zeigt einen Ausschnitt eines Streifendetektors 7, vor dem eine Blende 6 und ein Filter 5 angeordnet sind. Die Blende 6 begrenzt den Einfallsbereich der von der Probe 2 ausgehenden Strahlung in y-Richtung, wie bereits im Zusammenhang mit Fig. 2 beschrieben. Die im Bereich der Spaltöffnung 8 der Blende 6 freiliegenden Bereiche der Detektorelemente Dᵢ sind zusätzlich mit einem Filter 5 bedeckt, wobei das Filter 5 eine nicht-konstanten Durchlassfunktion f(x) in x-Richtung aufweist, und somit die einfallende Strahlung in zusätzlichen Bereichen innerhalb der Spaltöffnung 8 der Blende 6 ausgeblendet oder abgeschwächt wird. Bei dem Filter 5 kann es sich beispielsweise um ein Keilfilter handeln, bei dem sich die Durchlassfunktion kontinuierlich ändert. Besonders vorteilhaft ist es, wenn die Durchlassfunktion f(x) so gewählt ist, dass sie im Wesentlichen der Inversen der Einhüllenden einer zu erwartenden Intensitätsverteilung I(x) folgt. Es sind jedoch auch andere Filteranordnungen denkbar.

Bei der in Fig. 3 gezeigten Ausführungsform des Filters 5 ist die Durchlassfunktion weder in x- noch in y- Richtung konstant (f(x)≠const., f(y)≠const). Die nicht konstante Durchlassfunktion in y-Richtung kann, ähnlich wie bei der Blende 6, bewirken, dass jeweils nur ein Teil der einzelnen Detektorelemente Dᵢ der einfallenden Strahlung ausgesetzt ist oder aber die Strahlung in bestimmten Bereichen abgeschwächt wird.

Die Haupteinsatzbereiche des erfindungsgemäßen Röntgendiffraktometers, bei denen die Vorteile der Erfindung besonders gut zur Geltung kommen, sind insbesondere, aber nicht ausschließlich, Röntgenreflektometriemessungen (XRR - X-Ray Reflection), Röntgendiffraktometriemessung unter streifendem Einfall (GID - Grazing Incidence Diffraction) und Kleinwinkelröntgenstreuung unter streifendem Einfall (GISAXS - Grazing Incidence Small Angle X-Ray Scattering).

Die drei genannten Methoden werden häufig in Kombination miteinander zur Untersuchung von Oberflächenstruktur auf Nanoskala von Materialproben, typischerweise bei so genannten "dünne Filmen" angewendet. Hierbei versteht man unter "Oberfläche" die obersten Materialschichten durchaus bis zu einer Tiefe von 2µm oder mehr. Bei der XRR werden Eigenschaften rechtwinklig zur Oberfläche untersucht, wie Schichtdicke, Materialzusammensetzung und Rauhigkeit. Bei GID wird die laterale Struktur, bei GISAXS mesoskopische Materialeigenschaften parallel und rechtwinklig zur makroskopischen Oberfläche gemessen. Die Hauptanwendung dieser Methoden sind bei der Erforschung neuer Materialien in der Nanotechnologie und der Halbleiterindustrie.

Bei den genannten Messmethoden ist der Röntgenstrahleinfallwinkel αᵢ, d.h. der Winkel zwischen einfallenden Röntgenstrahlen und Gitterebene der Probe 2, nahe am und unter dem kritischen Winkel α_{c}, dem Winkel der totalen externen Reflektion von Röntgenstrahlen. Die Größe von α_{c} hängt von Röntgenwellenlänge und von den Materialeigenschaften ab. Ein typischer Wert von α_{c} liegt zwischen 0,2° und 0,6° für übliche Materialien bei Kupfer K_{α} -Röntgenstrahlung. Bei den Messungen ist es erforderlich, dass der Einfallswinkel sehr genau eingehalten wird (Δαᵢ /α_{c} <0,05). Ferner muss die Intensität der von der Probe 2 ausgehenden Strahlung als Funktion des Ausfallswinkels in der Streuebene (XRR, GISAXS) und als Funktion des axialen Ausfallswinkels (GID, GISAXS) sehr genau bestimmt werden. Bei dieser Messung mit sehr hoher Winkelgranularität (z.B. 0.005°) müssen außerdem Intensitäten von sehr hoher Schwankungsbreite (dynamischer Bereich bis 10⁸ bei abgeschmolzenen Röntgenröhren) und von sehr hohem Werten (bis - 10⁸ cps bei abgeschmolzenen Röntgenröhren) gemessen werden. Das erfindungsgemäße Röntgendiffraktometer erweitert künstlich den nicht ausreichenden dynamischen Bereich der Messapparatur, verändert das Untergrundrauschen (niedrigste messbare Zählrate) nicht und macht dadurch direkte Messungen möglich (z.B. XRR).

Im Fall von GISAXS kann die erforderliche Winkelauflösung in axialer Winkelrichtung zwar durch den Stand der Technik geleistet werden (z.B. Streifendetektor streifenabstand 50 µm mit digitaler Auslese), in der Streuebene wird aber eine deutlich höhere Winkelauflösung (um einen Faktor 2 bis 3 höher) benötigt. Dies wird durch das erfindungsgemäße Röntgendiffraktometer ermöglicht. Zwar verfügen CCD Detektoren von sich aus über eine höhere Granularität als Streifendetektoren, aber sie haben auch ein wesentlich höheres Grundrauschen. Da CCD Detektoren integrieren, sind sie keine Detektoren, die einzelne Photonen nachweisen. Für GISAXS Messungen wird diese Detektoreigenschaft aber benötigt.

Einzelphotonennachweis ist auch bei einfacher Kleinwinkelstreuungsmessung (SAXS) in Transmission, indem ein 2-D Bild durch das Verschieben eine Blende quer stehend zu aber entlang der Streifen gemessen wird, notwendig. Bei Transmissions-SAXS-Messungen sind Signalintensitäten typisch sehr schwach. Hier profitiert der erfindungsgemäße Aufbau von der Möglichkeit eines Einzelphotonennachweises. Darüber hinaus kann es auch bei dieser Methode vorteilhaft-sein, 2-D Aufnahmen anzufertigen.

Das erfindungsgemäße Röntgendiffraktometer erlaubt das Aufnehmen sowohl von 1-D als auch von 2-D Diffraktogrammen mittels eines konventionellen 1-D Streifendetektors 7 und ermöglicht neben einem Einzelphotonennachweis eine künstliche Vergrößerung des dynamischen Bereichs des Detektors 7. Gleichzeitig bietet das erfindungsgemäße Röntgendiffraktometer die Möglichkeit, die Ortsauflösung über die Granularität der Detektorelemente hinaus zu vergrößern.

### Bezugszeichenliste

- b: Spaltbreite
- Dᵢ: Detektorelementen
- 1: Quelle
- 2: Probe
- 3: Primäroptik
- 4: optische Vorrichtung
- 5: Filter
- 6: Blende
- 7: Detektor
- 8: Spaltöffnung
- 9: Ausleseeinrichtung
- 10: Auswerteeinrichtung
- 11: Computerdisplay

## Patentansprüche

1. Röntgendiffraktometer mit Mitteln zum Richten von Strahlung aus einer Quelle (1) auf eine Probe (2) mit einem Detektor (7) mit n im wesentlichen identischen, in einer ersten Richtung x parallel nebeneinander angeordneten, in einer zweiten Richtung y streifenförmigen Detektorelementen (Dᵢ); wobei i = 1, ...n, zum eindimensional ortsabhängigen Detektieren von der Probe (2) reflektierter, gestreuter oder gebeugter auf den Detektor (7) einfallender Strahlung und mit einer Nachweiselektronik zum Verarbeiten der Detektorsignale der n Detektorelemente (Dᵢ), wobei die Nachweiselektronik maximal eine bestimmte Strahlungsintensität pro Detektorelement (Dᵢ) zuverlässig verarbeiten kann ohne zu übersteuern,
**dadurch gekennzeichnet, dass**
zwischen der Position der Probe und dem Detektor (7) ein optisches Element angeordnet ist, das entsprechend einer vorgebbaren, nicht-konstanten Durchlassfunktion f(x) jeweils einen Teil der auf die Flächen der n Detektorelemente (Dᵢ) einfallenden reflektierten, gestreuten oder gebeugten Strahlung abdeckt oder abschwächt und/oder dass das optische Element eine relativ zum Detektor (7) entlang der Streifenrichtung y verschiebbare Blende (6) umfasst.

2. Röntgendiffraktometer nach Anspruch 1, **dadurch gekennzeichnet, dass** die von der Probe (2) auf den Detektor (7) einfallende Strahlung eine Intensitätsverteilung I(x) aufweist, die über mindestens eine Größenordnung, vorzugsweise mehrere Größenordnungen, variiert.

3. Röntgendiffraktometer nach Anspruch 1 oder 2, **dadurch gekennzeichnet, dass** die Durchlassfunktion f(x) in x-Richtung bis zu einem Maximalwert fₘₐₓ monoton zunimmt, wobei insbesondere fₘₐₓ = 1 gilt.

4. Röntgendiffraktometer nach einem der Ansprüche 2 oder 3, **dadurch gekennzeichnet, dass** die Durchlassfunktion f(x) so gewählt ist, dass sie im Wesentlichen der Inversen der Einhüllenden eines Diffraktogramms, I(x) folgt.

5. Röntgendiffraktometer nach einem der vorhergehenden Ansprüche, **dadurch gekennzeichnet, dass** zusätzlich ein Graufilter vorgesehen ist, das die Gesamtintensität der auf den Detektor (7) fallenden Strahlung integral um einen Faktor k abschwächt.

6. Röntgendiffraktometer nach einem der vorhergehenden Ansprüche, **dadurch gekennzeichnet, dass** das optische Element in Teilen für die Strahlung transparent und in anderen Teilen undurchlässig ist.

7. Röntgendiffraktometer nach einem der vorhergehenden Ansprüche, **dadurch gekennzeichnet, dass** das optische Element ein Keilfilter in x-Richtung umfasst.

8. Röntgendiffraktometer nach einem der vorhergehenden Ansprüche, **dadurch gekennzeichnet, dass** das optische Element einen Spalt (6) in x-Richtung umfasst, der in y-Richtung verschiebbar ist.

9. Röntgendiffraktometer nach Anspruch 8, **dadurch gekennzeichnet, dass** der Spalt (6) eine Breite (b) aufweist, die klein ist gegen den Abstand benachbarter Detektorelemente (Dᵢ), insbesondere kleiner als der halbe Abstand.

10. Röntgendiffraktometer nach einem der vorhergehenden Ansprüche, **dadurch gekennzeichnet, dass** das optische Element zwei separat verschiebbare Schneiden aufweist.

11. Röntgendiffraktometer nach einem der vorhergehenden Ansprüche, **dadurch gekennzeichnet, dass** das optische Element im Bereich zumindest einiger der n Detektorelemente (Dᵢ) unterschiedlich viele und/oder große über die Detektorfläche verteilte transparente Bereiche aufweist.

12. Röntgendiffraktometer nach einem der vorhergehenden Ansprüche, **dadurch gekennzeichnet, dass** es mehrere gegeneinander austauschbare und/oder miteinander kombinierbare optische Elemente aufweist.

13. Röntgendiffraktometer nach einem der vorhergehenden Ansprüche, **dadurch gekennzeichnet, dass** der Detektor (7) und die Nachweiselektronik den Einfall einzelner Strahlungsquanten auf die Detektorelemente (Dᵢ) registriert und zählt.

14. Röntgendiffraktometer nach einem der vorhergehenden Ansprüche, **dadurch gekennzeichnet, dass** der Winkel zwischen der auf die Probe (2) einfallenden und der von der Probe (2) ausgehenden reflektierten, gestreuten oder gebeugten Strahlung zwischen 165° und 180° liegt.

15. Röntgendiffraktometer nach einem der vorhergehenden Ansprüche, **dadurch gekennzeichnet, dass** das Röntgendiffraktometer als Punktdetektor (0-D Detektor) Verwendung findet, indem die von der Nachweiselektronik detektierten Strahlungsintensitäten der einzelnen Detektorelemente aufaddiert werden.

## Claims

1. An X-ray diffractometer comprising means for directing radiation from a source (1) onto a sample (2) having a detector (7) with n substantially identical detector elements (Dᵢ) which are disposed in parallel, next to each other in a first direction x and which extend in strips in a second direction y, wherein i = 1, ...n , for one-dimensional spatially-resolved detection of radiation reflected, scattered or diffracted by the sample (2) onto the detector (7), and with detection electronics for processing the detector signals of the n detector elements (Dᵢ), wherein the detection electronics can reliably process at maximum one special radiation intensity per detector element (Dᵢ) without overloading;
**characterized in that**
between the position of the sample and the detector (7) an optical element is disposed which covers or weakens a part of the reflected, scattered or diffracted radiation incident on the surfaces of the respective n detector elements (Dᵢ) in correspondence with a predetermined, non-constant transmission function f(x) and/or that the optical element comprises an aperture (6) which can be displaced relative to the detector (7) along the strip direction y.

2. The X-ray diffractometer of claim 1, **characterized in that** the radiation incident from said sample (2) onto said detector (7) has an intensity distribution I(x) which varies over at least one order of magnitude, preferably over a multitude of orders of magnitude.

3. The X-ray diffractometer of claim 1 or claim 2, **characterized in that** said transmission function f(x) increases monotonically in said direction x to a maximum value fₘₐₓ, wherein, in particular, fₘₐₓ = 1 .

4. The X-ray diffractometer of any one of claims 2 or 3, **characterized in that** said transmission function f(x) is selected so as to substantially follow the inverse of an envelope of a diffractogram, I(x).

5. The X-ray diffractometer of any one of the preceding claims, **characterized in that** a gray filter is provided in addition, weakening integrally the overall intensity of the radiation incident on said detector (7) by a factor k.

6. The X-ray diffractometer of any one of the preceding claims, **characterized in that** said optical element is partially transparent and partially impermeable to the radiation.

7. The X-ray diffractometer of any one of the preceding claims, **characterized in that** said optical element comprises a wedge filter in said direction x.

8. The X-ray diffractometer of any one of the preceding claims, **characterized in that** said optical element has a gap (6) in said direction x which can be displaced in said direction y.

9. The X-ray diffractometer of claim 8, **characterized in that** said gap (6) has a width (b) which is small compared to a separation between the neighboring detector elements (Dᵢ), in particular which is smaller than half said separation.

10. The X-ray diffractometer of any one of the preceding claims, **characterized in that** said optical element comprises two blades which can be displaced separately.

11. The X-ray diffractometer of any one of the preceding claims, **characterized in that** said optical element has transparent regions of varying number and/or size distributed over the detector surface in a region of at least some of said n detector elements (Dᵢ).

12. The X-ray diffractometer of any one of the preceding claims, **characterized in that** said diffractometer has a multitude of said optical elements which can be replaced with one another and/or combined with each other.

13. The X-ray diffractometer of any one of the preceding claims, **characterized in that** said detector (7) and said detection electronics register and count the incidence of individual radiation quanta on said detector elements (Dᵢ).

14. The X-ray diffractometer of any one of the preceding claims, **characterized in that** the angle between said reflected, scattered or diffracted radiation incident on said sample (2) and emitted from said sample (2) is between 165° and 180°.

15. The X-ray diffractometer of any one of the preceding claims, **characterized in that** said X-ray diffractometer is used as a point detector (0-D detector) by adding radiation intensities of individual said detector elements detected by said detection electronics.

## Revendications

1. Diffractomètre à rayons X avec des moyens pour diriger le rayonnement d'une source (1) sur un échantillon (2) et avec un détecteur (7) ayant n éléments détecteurs (Dᵢ) essentiellement identiques qui sont disposés parallèlement les uns aux autres dans une première direction x et qui s'étendent en forme de bande dans une deuxième direction y, avec i = 1, ... n, pour la détection unidimensionnelle à résolution spatiale du rayonnement réfléchi, dispersé ou diffracté par l'échantillon (2) sur le détecteur (7) et avec une électronique de détection pour traiter les signaux de détecteur des n éléments détecteurs (Dᵢ), l'électronique de détection pouvant traiter de manière fiable, sans saturation, une intensité de rayonnement maximale définie par élément détecteur (Dᵢ),
**caractérisé en ce**
**qu'**entre la position de l'échantillon et le détecteur (7) est disposé un élément optique qui, en fonction d'une fonction de transmission f(x) non constante prédéfinissable, masque ou affaiblit une partie du rayonnement réfléchi, dispersé ou diffracté sur les surfaces des n éléments détecteurs (Dᵢ) et/ou que l'élément optique comprend un diaphragme (6) déplaçable par rapport au détecteur (7) le long de la direction des bandes y.

2. Diffractomètre à rayons X selon la revendication 1, **caractérisé en ce que** le rayonnement incident de l'échantillon (2) sur le détecteur (7) présente une répartition d'intensité I(x) qui varie sur au moins un ordre de grandeur, de préférence plusieurs ordres de grandeur.

3. Diffractomètre à rayons X selon la revendication 1 ou 2, **caractérisé en ce que** la fonction de transmission f(x) augmente de façon monotone dans la direction x jusqu'à une valeur maximale fₘₐₓ, avec en particulier fₘₐₓ = 1.

4. Diffractomètre à rayons X selon l'une des revendications 2 ou 3, **caractérisé en ce que** la fonction de transmission f(x) est choisie de façon qu'elle suive essentiellement l'inverse de l'enveloppe d'un diffractogramme, I(x).

5. Diffractomètre à rayons X selon l'une des revendications précédentes, **caractérisé en ce qu'**il est prévu en plus un filtre gris qui affaiblit intégralement d'un facteur k l'intensité totale du rayonnement incident sur le détecteur (7).

6. Diffractomètre à rayons X selon l'une des revendications précédentes, **caractérisé en ce que** l'élément optique est en parties transparent et en d'autres parties opaque au rayonnement.

7. Diffractomètre à rayons X selon l'une des revendications précédentes, **caractérisé en ce que** l'élément optique comprend un filtre en coin dans la direction x.

8. Diffractomètre à rayons X selon l'une des revendications précédentes, **caractérisé en ce que** l'élément optique comprend une fente (6) en direction x qui est déplaçable en direction y.

9. Diffractomètre à rayons X selon la revendication 8, **caractérisé en ce que** la fente (6) présente une largeur (b) qui est petite par rapport à l'intervalle entre des éléments détecteurs (Dᵢ) voisins, en particulier plus petite que la moitié de l'intervalle.

10. Diffractomètre à rayons X selon l'une des revendications précédentes, **caractérisé en ce que** l'élément optique présente deux lames déplaçables séparément.

11. Diffractomètre à rayons X selon l'une des revendications précédentes, **caractérisé en ce que** l'élément optique présente des régions transparentes différentes en nombre et/ou en taille réparties sur la surface du détecteur dans la région d'au moins quelques-uns des n éléments détecteurs (Dᵢ).

12. Diffractomètre à rayons X selon l'une des revendications précédentes, **caractérisé en ce qu'**il présente plusieurs éléments optiques interchangeables et/ou combinables entre eux.

13. Diffractomètre à rayons X selon l'une des revendications précédentes, **caractérisé en ce que** le détecteur (7) et l'électronique de détection enregistrent et comptent l'incidence de quanta individuels de rayonnement sur les éléments détecteurs (Dᵢ).

14. Diffractomètre à rayons X selon l'une des revendications précédentes, **caractérisé en ce que** l'angle entre le rayonnement incident sur l'échantillon (2) et le rayonnement réfléchi, dispersé ou diffracté par l'échantillon (2) est compris entre 165° et 180°.

15. Diffractomètre à rayons X selon l'une des revendications précédentes, **caractérisé en ce que** le diffractomètre à rayons X est utilisé comme détecteur de point (détecteur 0-D), les intensités de rayonnement des différents éléments détecteurs détectées par l'électronique de détection étant additionnées.
